# EUROPEAN PATENT APPLICATION

(11) **EP 3 351 847 A1**
(43) Date of publication of application: **25.07.2018**
(21) Application number: 16846842.9
(22) Date of filing: 12.09.2016
(51) Int. Cl.: F17D 1/08, F17D 1/14, F17D 3/01, F17D 5/00

(54) **WATER PIPING SYSTEM AND CONTROL METHOD THEREFOR**

(30) Priority: 18.09.2015 KR 20150132357
(71) Applicant: Flowtech Co., Ltd., Incheon, 21634 (KR)
(72) Inventor: YANG, Jae Gu, Incheon 22001 (KR); OH, Jae Wook, Incheon 22238 (KR); YANG, Ji Suk, Incheon 22001 (KR)
(74) Representative: Gulde & Partner
(86) International application number: PCT/KR2016/010274
(87) International publication number: WO 2017/048021

(57) **Abstract**

The present invention relates to a water piping system prevents degradation of water quality due to fluid remaining in a fuel tank for a long period of time and removes air and other impurities in a pressure tank and a pipe, and a method of controlling the same. The water piping system includes: a pump pressurizing fluid; a main pipe for delivering the fluid pressurized by the pump; a main valve disposed at an outlet port of the pump in the main pipe; a pressure tank connected to the main pipe; and a sub-pipe having a first end connected to a front side of the main valve of the main pipe and a second end connected to the pressure tank so that some of fluid pressurized and discharged from the pump is delivered to the pressure tank through the sub-pipe, thereby discharging substances in the pressure tank to the outside.

## Description

### Technical Field

The present invention relates to a water piping system and, more particularly, to a water piping system that prevents degradation of water quality due to fluid remaining in a pressure tank for a long period of time and removes gas and other impurities in a pressure tank and a pipe, and a method of controlling the water piping system.

### Background Art

In general, when a pump is suddenly stopped or a valve is suddenly closed in a water piping system, transient condition in which the flow rate of fluid rapidly changes is generated, and this phenomenon is called water hammer. Due to the water hammer, the pressure in the pipe rapidly increases or the pressure in the pipe drops under the saturation vapor pressure of water and vapor is produced, and then the pipe line may be broken or damaged by shock waves in the process of column separation and return.

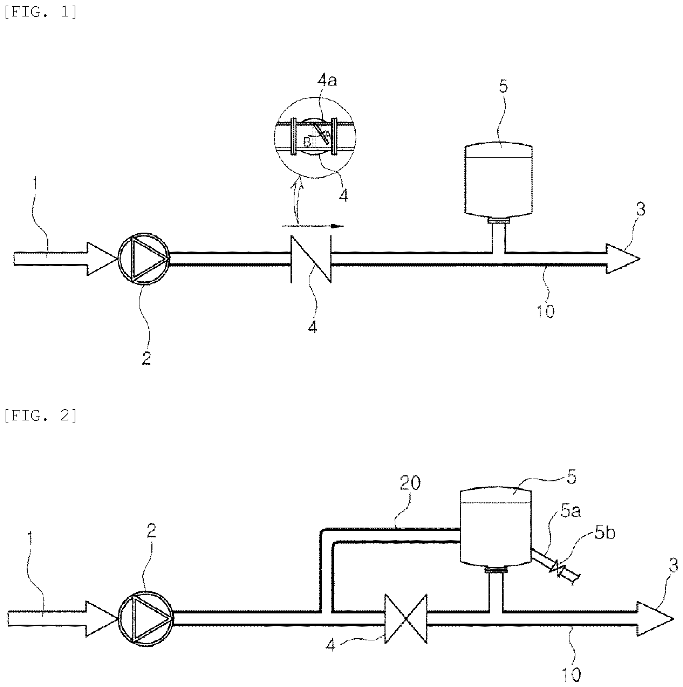

For example, a common piping system shown in FIG. 1 includes a pump 2 that pressurizes water flowing inside through an inlet 1, a main pipe 10 through which the pressurized water flows, and an outlet 3 to which the water from the main pipe 10 is discharged. A main valve 4 that can be a check valve for connecting/disconnecting the flow of fluid or preventing backflow of fluid or other valves, a flexible joint (not shown) for preventing vibration, and a shutoff valve (not shown) for connecting/disconnecting the flow of water to the outlet 3 may be installed in a main pipe 10. In this water piping system, when the pump 2 suddenly stops, the fluid flowing through the main pipe 10 temporarily keeps flowing through the main pipe 10 in the main flow direction by the inertia, but the discharge amount from the pump 2 rapidly decreases. Further, the fluid keeps flowing forward (in the main flow direction) to the outlet 3 by inertia, so negative pressure is generated at the rear end (outlet port) of the pump, vapor cavity is generated in the pipe, and the fluid flows backward, whereby vapor cavity breaks. In this process, a large shock wave is generated and may damage the main pipe 10 and the pump 2.

A pressure tank 5 is connected to the main pipe 10 in the related art to attenuate the water hammer. A predetermined amount of fluid is kept in the pressure tank 5, so when the pump 2 suddenly stops, some of the fluid in the pressure tank 5 is discharged to the main pipe 10 before the pressure in the main pipe 10 drops to a predetermined low level or vapor cavity is generated in the main pipe 10. Further, when water hammer is generated due to backflow of the fluid in the main pipe 10, fluid is supplied into the pressure tank 5, thereby attenuating shock.

Fluid flows into/out of the pressure tank 5, depending on the states of the piping system, and the fluid flows inside/outside even if lift changes due to simple stop of the pump or a change in the number of operating parts. A pressure change is very little when the pump normally operates, so inflow/outflow of fluid is very little, so a large amount of fluid very rarely flows inside/outside, for example, in the case of a power failure. Since only some of the entire fluid kept in the pressure tank 5 flows inside/outside, the fluid at the upper portion in the pressure tank does not move and remains in the pressure tank 5 for a long period of time. Further, the water in a pressure tank installed outdoor at a place where temperature is relatively high (around the equator) is higher in temperature and specific volume than fluid that flows in pipes, so it is light. Accordingly, a laminar flow is generated and the fluid remains in the pressure tank 5 for a long period of time. That is, the fluid at the upper portion in the pressure tank 5 hardly flows and only the fluid at the lower portion repeatedly flows inside/outside. When the fluid at the upper portion in the pressure tank 5 remains (stays) for a long period of time, contamination may become worse and causes deterioration of water quality (so called 'dead water'). The deterioration of water quality results in very serious problems when a piping system is applied to a system for supplying drinkables such as tap water or milk. Further, as for water piping systems for sewage or water containing a large amount of solid, it is required to discharge impurities accumulated in a pressure tank or a connection pipe for the pressure tank and it is also required to clean the inner side of the pressure tank. Further, bubbles in the fluid flowing through a pipe produce air pockets in the pipe, thereby reducing the cross-sectional area of the pipe through which the fluid flows, whereby it may cause unstable flow and water hammer accordingly. Further, pipe systems that are used for local heating or used in plants are generally used or high-temperature or chemical fluid, so installation of air valves is limited, and accordingly, there is a need for removing gas in pipes. There has been no way of discharging dirt, removing gas, and flushing a pressure tank in the related art.

### Disclosure

### Technical Problem

The present invention has been made in an effort to solve the problems with water piping systems in the related art and an object of the present invention is to prevent dead water due to fluid remaining in a pressure tank for a long period of time by discharging the fluid. Another object of the present invention is to provide a water piping system that can prevent functional reduction as a water hammer attenuator by having a function of discharging impurities in a pressure tank to the outside and flushing the pressure tank and that can effectively remove gas in a pipe, and a method of controlling the water piping system.

### Technical Solution

In order to achieve the above object, according to one aspect of the present invention, there is provided a water piping system that includes: a pump pressurizing fluid; a main pipe for delivering the fluid pressurized by the pump; a main valve disposed at an outlet port of the pump; a pressure tank connected to the main pipe; a sub-pipe having a first end connected to a front side of the main valve of the main pipe and a second end connected to the pressure tank so that some of the fluid pressurized and discharged from the pump flows into the pressure tank through the sub-pipe; and a control valve disposed in the sub-pipe to open and close a flow channel.

The pump may be a plurality of pumps connected to each other in parallel, the sub-pipe may be disposed at a front end of a main valve disposed at an outlet port of any one of the pumps, and the control valve may be disposed in the sub-pipe.

The pump may be a plurality of pumps connected to each other in parallel, the sub-pipe may be a plurality of sub-pipes connected to the pressure tank, the sub-pipes may be connected to front ends of main valves disposed at outlet ports of the pumps, respectively, and the control valve may be disposed in each of the sub-pipes.

The sub-pipes may have first ends respectively connected to the front ends of the main valves disposed at the outlet ports of the pumps and second ends connected to a header, and the header may be connected to the pressure tank.

The control valve may be a one-way valve that is opened only when pressure at a front end thereof is higher than pressure at a rear end.

The control valve may be closed after a predetermined period of time passes from the moment when the pump is stopped.

The water piping system may further include a controller controlling opening and closing of the control valve, in which the controller may close the control valve after a predetermined period of time passes from the moment when the pump is stopped.

The system may further include: a controller controlling opening and closing of the control valve; a first pressure sensor sensing pressure at the front side of the main valve of the main pipe; and a second pressure sensor sensing pressure at a rear side of the main valve of the main pipe, in which the controller may receive and compare pressures at the front side and the rear side of the main valve sensed by the first pressure sensor and the second pressure sensor, and may close the control valve after a predetermined period of time passes when the pressure at the rear side of the main valve is higher than the pressure at the front side of the main valve as a result of the comparing.

The system may further include a differential pressure sensor sensing a pressure difference between the front side and a rear side of the main valve, in which the differential pressure sensor may sense a pressure difference between the front side and the rear side of the main valve and may control the control valve to close after a predetermined period of time passes when it is determined that pressure at the rear side of the main valve is higher than pressure at the front side of the main valve.

The system may further include a flow rate sensor disposed at the rear side of the main valve of the main pipe, in which the control valve may be closed after a predetermined period of time passes when it is determined that the pump has been stopped on the basis of flow of fluid sensed by the flow rate sensor.
The control valve may be a mechanical slow closing valve that is closed after a predetermined period of time passes from the moment when the pump is stopped, and the control valve may be a slow closing check valve.

The control valve may include: a valve body disposed in a sub-pipe having a front end connected to a front end of the main valve of the main pipe and a rear end connected to the pressure tank; and an actuator having a disc dividing an inside horizontally to the left and right therein, having both ends connected to the front end and the rear end of the main valve, respectively, and opening and closing the valve body when the disc is moved by a pressure difference between the front end and the rear end of the main valve. The system may further include a needle valve disposed at a front side of the actuator.

The system may further include a diffuser disposed in the pressure tank and connected to the sub-pipe, in which the diffuser may be connected to the sub-pipe connected to a rear side of the control valve, may be annularly disposed around an inner side of the pressure tank, and may have a plurality of spray holes formed through a surface thereof.

The system may further include a diffuser disposed in the pressure tank and connected to the sub-pipe, in which the diffuser may be connected to the sub-pipe connected to a rear side of the control valve and may have an end curved in an elbow shape.

The system may further include a sub-pump disposed in the sub-pipe to force fluid in the sub-pipe to the pressure tank.

The pressure tank may be equipped with a discharge pipe and a discharge valve so that gas or impurities are discharged out of the pressure tank.

According to another aspect of the present invention, there is provided a method of controlling the water piping system described above, the method including: delivering fluid through the main pipe and the sub-pipe by operating the pump; opening the control valve disposed in the sub-pipe; monitoring whether the pump is operated; and closing the control valve when the pump is stopped. The control valve may be closed after a predetermined period of time passes from the moment when the pump is stopped.

According to another aspect of the present invention, there is provided a method of controlling the water piping system described above, the method including: delivering fluid through the main pipe and the sub-pipe by operating the pump; opening the control valve disposed in the sub-pipe; sensing pressure at a front side and pressure at a rear side of the main valve of the main pipe; and comparing the sensed pressures at the front side and the rear side of the main valve and closing the control valve when the pressure at the rear side of the main valve is higher than the pressure at the front side of the main valve, as a result of the comparing. The control valve may be closed after a predetermined period of time passes, when the pressure at the rear side of the main valve is higher than the pressure at the front side of the main valve, as a result of comparing the sensed pressures at the front side and the rear side of the main valve.

According to another aspect of the present invention, there is provided a water piping system that includes: a pump pressurizing fluid; a main pipe for delivering the fluid pressurized by the pump; a main valve disposed at an outlet port of the pump; a pressure tank connected to the main pipe; a sub-pipe having a first end connected to a front end of the pump and a second end connected to the pressure tank so that fluid in the pressure tank is supplied to a front side of the pump through the sub-pipe; and a control valve disposed in the sub-pipe to open and close a flow channel.

### Advantageous Effects

According to the water piping system and the method of controlling the system of the present invention, it is possible to prevent dead water due to fluid remaining for a long period of time in a pressure tank and prevent deterioration of fluid quality and deterioration of the function as a water hammer attenuator by discharging impurities in the pressure tank and flushing the pressure tank. Further, it is possible to prevent water hammer due to a friction loss (a decrease in cross-sectional area) and unstable flow that may be caused by air pockets formed by bubbles that are contained in fluid and collect in a pipe.

### Description of Drawings

FIG. 1 is a view schematically showing a common water piping system of the related art;
FIG. 2 is a view showing the configuration of a water piping system according to the present invention;
FIGS. 3 is views showing the configuration of the water piping system with a control valve in a sub-pipe;
FIGS. 4 is views schematically showing a change in flow of fluid through a main pipe and a sub-pipe by operation of a control valve;
FIG. 5 is a view showing a water piping system equipped with a control valve that is electrically controlled to open/close in accordance with an embodiment of the present invention;
FIG. 6 is a flowchart showing a process of controlling a water piping system with an electric control valve, as shown in FIG. 5;
FIG. 7 is a view showing a water piping system equipped with a control valve that is electrically controlled to open/close in accordance with another embodiment of the present invention;
FIG. 8 is a flowchart showing a process of controlling a water piping system with an electric control valve, as shown in FIG. 7;
FIG. 9 is a view showing a water piping system equipped with a control valve that is controlled to open/close by a differential pressure sensor in accordance with the present invention;
FIG. 10 is a view showing the configuration of a water piping system equipped with an actuator, a valve body, and a needle valve for a control valve in accordance with the present invention;
FIG. 11 is a view showing a water piping system equipped with a control valve that is controlled to open/close by an flow sensor in accordance with the present invention;
FIG. 12 is a view showing the configuration of a water piping system equipped with a sub-pump in a sub-pipe in accordance with the present invention;
FIGS. 13 is view showing the configuration of a water piping system equipped with a diffuser in a pressure tank in accordance with the present invention; and
FIG. 14 is a view showing the configuration of a water piping system according to another embodiment of the present invention.

### <Description of reference characters>

| | | |
|---|---|---|
| 2: pump | 4 | : main valve |
| 4a: disc | 5 | : pressure tank |
| 10 : main pipe | 20 | : sub-pipe |
| 30 : control valve | 50 | : diffuser |
| 100 : controller | | |

### Mode for Invention

The configuration and operation of a water piping system according to the present invention is described in detail with reference to embodiments and the accompanying drawings. The water piping system stated herein includes all kinds of fluid piping systems such as a common water supply pipe, circulation pipes for heating/cooling and industries, pipes for agriculture and industries, petrochemical plants, and pipes for drinkables.

FIGS. 2 to 3 show the configuration of a water piping system according to the present invention. As shown in the figures, a water piping system according to the present invention includes: a pump 2 that pressurizes fluid; a main pipe 10 that delivers the fluid pressurized by the pump 2; and a main valve 4 that is disposed close to the outlet of the pump 2 in the main pipe 10, and further includes a sub-pipe 20 and a control valve 30.

The sub-pipe 20 allows some of the fluid pressurized and discharged from the pump 2 into a pressure tank 5 to discharge the substance in the pressure tank 5 or the gas in the main pipe 10 to the outside, and as shown in FIG. 2, has a first end connected to the front side of the main valve 4 in the main pipe 10 and a second end connected to the pressure tank 5.

According to this configuration, when fluid is pressurized and discharged from the pump 2, most of the fluid is delivered through the main pipe 10 via the main valve 4, but some of the fluid is delivered through the sub-pipe 20. The fluid flowing through the sub-pipe 20 is supplied under relatively high pressure to the upper portion of the pressure tank 5, whereby it pushes out the fluid in the pressure tank 5. Accordingly, the fluid in the pressure tank 5 is discharged to the main pipe 10. The fluid in the pressure tank 5 is continuously discharged by this operation, so a dead water phenomenon that fluid remains (stays) in the pressure tank 5 for a long period of time is prevented. Further, impurities in the pressure tank are also discharged when the fluid is discharged, so it is possible to prevent the problem of deterioration of water quality in the pressure tank 5.

In this configuration, a discharge pipe 5a and a discharge valve 5b may be disposed at a side (preferably the lower portion) of the pressure tank 5 so that impurities can be easily discharged out of the pressure tank 5. The discharge valve 5b is an electrically controllable valve such as an electric valve and it is possible to smoothly discharge impurities to the outside by opening the discharge valve 5b when fluid is supplied into the pressure tank 5 through the sub-pipe 20. Further, when air flows into the pressure tank 5 and the liquid level in the pressure tank 5 decreases, the air is discharged through an exhaust valve (not shown) at the upper portion of the pressure tank 5, so the liquid level can be maintained at a predetermined height.

Meanwhile, gas in the main pipe 10 flows into the pressure tank 5 through the sub-pipe 20, so the gas in the pipes is removed. Entrained air causes circulation disorder and, cavitation, noise, and vibration of the pump, and the entrained air comes into a free air bubble state at portions with a low flow speed, thereby forming air pockets, so it becomes a factor of circulation disorder in a pipe. Further, the dissolved oxygen in the bubbles in a pipe causes oxidation and corrosion of metallic pipes or devices and increases friction in a pipe by reducing the cross-sectional area of the pipe. Accordingly, it is required to increase the power of a pump and replace pipes, so the maintenance cost is increased and the lifespan of pipes is decreased. Bubbles in a pipe increase in volume and collect at a portion under low pressure (a higher portion of the pipe), so air pockets are formed and the cross-sectional area of the pipe is reduced. Accordingly, the speed of fluid is increased and loss resistance is accordingly increased, and unstable flow is caused. Further, the air pockets temporarily clog the pipe (stop water supply) and some of the air pockets break and generate shock waves, which causes water hammer. Accordingly, air in a pipe should be removed.

On the other hand, air has a characteristic that it comes into a free air bubble state at a flow speed of 0.6m/s or less in a pipe whereby, at a flow speed greater than 0.6m/s, it is mixed with flowing fluid and then flows as entrained air through a pipe. In general, the flow speed in a normal state of pipes are designed to about 1 ∼ 3m/s, so it is not easy to sufficiently remove air that flows inside from the outside or has remained from the early operation. Under this condition, when some of or the entire fluid from the pump 2 is sent to the upper portion of the pressure tank 5 through the sub-pipe 20, the fluid decreases in speed and moves down in the pressure tank 5 because the pressure tank 5 has a diameter sufficiently larger than that of the main pipe 10 or the sub-pipe 20, so the air comes into the free air bubble state and is mostly pushed up in the pressure tank 5, and then fluid is discharged to the main pipe. Further, the air pushed up collects at the upper portion and is discharged through an air exhaust unit (not shown), whereby the liquid level in the pressure tank 5 is continuously controlled at a predetermined height.

For example, assuming that the outlet diameter of the pump 2 is 300mm and the flow speed is 3m/s, when the entire fluid is sent to the pressure tank 5, only some of the fluid flows into pressure tank 5. However, the diameter of the pressure tank 5 is usually over 1000mm, so the flow speed (Q = AV, Q: flow rate, A: cross-sectional area, V: flow speed) of fluid from the upper portion to the lower portion in the pressure tank 5 decreases 11.1 times, because the cross-sectional area is in proportion to the square of the diameter, that is, the cross-sectional area increases 11.1 times. Accordingly, the fluid flows from the upper portion to the lower portion in the pressure tank 5 at a speed of about 0.27m/s that is 1/11.1 times the flow speed of 3m/s at the outlet of the pump 2. In this process, the air (bubbles) comes into a free air bubble state at the upper portion and only the liquid is discharged through the pipe connected to the lower portion. Meanwhile, the air (bubbles) moved to the upper portion reduces the liquid level, but it is possible to handle the air even though air continuously flows into the pressure tank 5 by discharging the compressed air in the pressure (controlling the liquid level by opening/closing an electronic valve in response to a signal from a liquid level sensor in an automatic control system), so the liquid level is maintained in an appropriate level in the pressure tank 5. Accordingly, the pressure tank 5 performs the function of an air discharge device that is useful for a piping system required to discharge air.

On the other hand, when a sufficient cross-sectional area of the sub-pipe 20 is ensured, fluid flows through the sub-pipe 20 even without specific controlling, so it is possible to easily discharge the substances in the pressure tank 5. However, the cross-sectional area of the main pipe 10 should be sufficiently larger than the cross-sectional area of the sub-pipe 20 in order not to interfere with the flow of fluid through the main pipe 10, so it is preferable to make the cross-sectional area of the sub-pipe 20 as small as possible. However, when the cross-sectional area of the sub-pipe 20 decreases, fluid may not smoothly flow through the sub-pipe 20. Accordingly, when the cross-sectional area of the sub-pipe 20 is relatively small, the main valve 4 that controls the main pipe 10 is normally opened so that fluid can be delivered through the main pipe 10. Further, in order to discharge the substances (fluid, gas, and other impurities remaining for a long period of time) in the pressure tank 5, the main valve 4 is partially or entirely closed so that the fluid flowing through the main pipe 10 is partially or entirely delivered to the pressure tank 5 through the sub-pipe 20. Further, it may be possible to open and close the main valve 4 with a predetermined period so that the substances in the pressure tank 5 is discharged at every predetermined time. Further, when the main valve 4 is closed by 50 to 100%, the fluid flowing through the sub-pipe 20 increases in speed, so it is possible to achieve the effect of flushing the pressure tank 5.

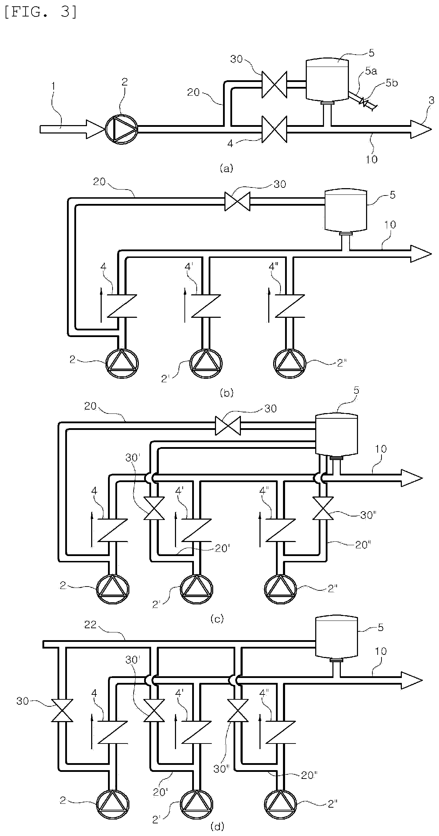

On the other hand, as shown in FIGS. 3, a control valve 30 may be additionally disposed in the sub-pipe 20 to connect/disconnect the flow channel.

In general, water hammer is not generated while the pump 2 is normally operated, so the pressure tank 5 is also in a standby state without performing a specific function, and accordingly, even though flushing is performed, it does not cause a problem with the system. However, pressure drops in the main pipe 10 when the pump 2 is suddenly stopped, so when the fluid in the pressure tank 5 is discharged to the main pipe 10 and then the fluid flows backward in the main pipe 10, fluid flows into the pressure tank 5 to attenuate shock. Accordingly, when fluid flows backward, as described above, it is required to attenuate shock to the fluid flowing into the pressure tank 5 using the pressure in the pressure tank 5, so the fluid supply through the sub-pipe 20 is stopped to maintain the pressure in the pressure tank 5. Further, the entire water in the pipes may flow backward through the sub-pipe 20 and it may cause an accident, so the control valve 30 may be disposed in the sub-pipe 20 to prevent this case.

As described above, the control valve 30 may be a valve that is opened when the pump 2 is operated and is closed when the pump 2 is stopped. To this end, as an embodiment, the control valve 30 may be a one-way valve that is opened only when the pressure at the front end of the control valve 30 is higher than the pressure at the rear end.

The fact that the pressure at the front end of the control valve 30 is higher than the pressure at the rear end means that the pump 2 is in operation, and the fact that the pressure at the rear end of the control valve 30 is higher than the pressure at the front end means that fluid flows backward due to stopping of the pump 2. Accordingly, when the control valve 30 is a one-way valve that is opened only when the pressure at the front end thereof is higher than the pressure at the rear end, the valve is opened and flushing and removal of gas can be performed when the pump 2 is in operation, and the valve is closed and it is possible to attenuate water hammer in the pressure tank 5 when the pump 2 is stopped. The one-way valve may be a check valve, a pneumatic valve, a diaphragm valve, and a relief valve, etc.

FIG. 3(a) shows a water piping system equipped with one pump 2, a sub-pipe 20, and a control valve 30, and FIGS. 3(b) and 3(c) show a water piping system equipped with a plurality of pumps 2, 2', and 2" connected in parallel. In the water piping system with a plurality of pumps connected in parallel, a sub-pipe 20, 20', or 20" is connected to the front end of a main valve 4, 4', or 4" disposed at the outlet port of at least one of the pumps. For example, as shown in FIG. 3(b), one sub-pipe 20 may be disposed only at the front end of the main valve 4 disposed at the outlet port of any one pump 2 of the plurality of pumps, and a control valve 30 may be disposed in the sub-pipe 20. Alternatively, as shown in FIG. 3(c), a plurality of sub-pipes 20, 20', and 20" may be connected to a pressure tank 5 and respectively connected to the front ends of main valves 4, 4', and 4" disposed at the outlet ports of the pumps 2, 2', and 2", respectively, and control valves 30, 30', and 30" may be disposed in the sub-pipes 20, 20', and 20", respectively. Further, as shown in FIG. 3(d), first ends of the sub-pipes 20, 20', and 20" may be connected to the front ends of the main valves 4, 4', and 4" disposed at the outlet ports of the pumps 2, 2', and 2", respectively, second ends of the sub-pipes may be connected to a header 22, and the header 22 may be connected to the pressure tank 5.

The configuration shown in FIG. 3(b) may be used only for flushing the pressure tank 5 and the configuration shown in FIG. 3(c) may be used for preventing slamming of the main valves 4, 4', and 4" at the outlet ports of the pumps 2, 2', and 2" when the pumps are stopped, in addition to flushing the pressure tank 5.

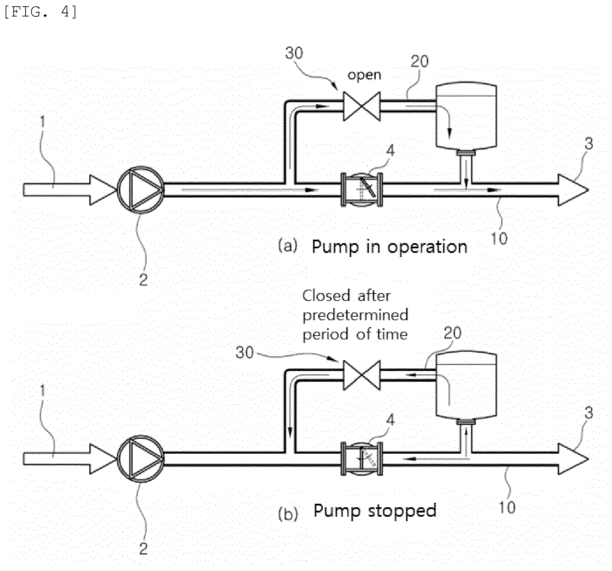

On the other hand, the control valve 30 may be a slow closing valve that is closed after a predetermined period of time passes from the moment when the pump 2 is stopped in order to attenuate water hammer. FIGS. 4 schematically shows a change in flow of fluid through the main pipe 10 and the sub-pipe 20 by operating the control valve 30.

As shown in FIG. 4 (a), fluid is discharged at high pressure from the outlet port of the pump 2 while the pump 2 is operated, so the pressure at the front end of the main valve 4 (which is a check valve in FIGS. 4) is higher than the pressure at the rear end of the main valve 4. Accordingly, fluid is delivered through the main pipe 10 after pushing a disc 4a in the main valve 4. Further, since the control valve 30 is open, the fluid pressurized by the pump 2 flows to the sub-pipe 20 from the main pipe 10 at the front side of the main valve 4, keeps flowing into the pressure tank 5, and then flows back into the main pipe 10 at the rear side of the main valve 4.

Further, as shown in FIG. 4 (b), when the pump 2 is stopped, discharging of fluid from the pump 2 is suddenly stopped, so the pressure at the front side of the main valve 4 drops, so fluid flows backward through the main valve 4 and the disc 4a in the main valve 4 starts to close. The disc 4a in the main valve 4 is rapidly closed when backflow is generated, in which a large pressure difference is generated between the front side and the rear side of the main valve 4, so slamming (a phenomenon in which shock waves are generated when a valve disc shuts with a bang) of the main valve 4 is generated. Shock waves are generated by the slamming and the piping system is damaged accordingly. However, since the sub-pipe 20 and the control valve 30 are additionally provided in the present invention, the fluid flowing backward at the rear end of the main valve 4 flows into the pressure tank 5 and the fluid in the pressure tank 5 is supplied to the front end of the main valve 4 through the sub-pipe 20 while the control valve 30 is open, so some of the pressure drop at the front end of the main valve 4 is compensated. Accordingly, the closing speed of the disc 4a in the main valve 4 is decreased and slamming of the main valve 4 is attenuated. Further, negative pressure that is generated in the main pipe 4 is suppressed.

However, fluid can be supplied only for a predetermined period of time to the front end of the main valve 4 through the sub-pipe 20 when the pump is stopped. If a large amount of fluid is continuously supplied to the front end of the main valve 4 through the sub-pipe 20, an accident may be generated due to backflow. Accordingly, fluid may be supplied to the front side of the main valve 4 through the sub-pipe 20 temporarily for a predetermined period of time such that the main valve 4 can be slowly closed. The period of time may be experimentally determined as an appropriate value in advance, depending on the size or the operation state of the water piping system.

In order to supply fluid to the front side of the main valve 4 through the sub-pipe 20 for a predetermined period of time when the pump is suddenly stopped, the control valve 30 may be a slow closing valve that automatically closes or gradually closes when a predetermined period of time passes after the pump is stopped.

There are various slow closing valves, but a mechanical valve may be used herein. The mechanical control valve 30 is configured to automatically close after a predetermined period of time passes when the pump is stopped, by a mechanical configuration thereof without a specific controller. A slow closing check valve may be exemplified as the mechanical valve. The slow closing check valve includes a hydraulic cylinder that provides a shock-absorbing force opposite to the closing direction of a disc. Accordingly, the disc is opened when the pump is in operation and is closed when the pump is stopped because fluid flows through the sub-pipe 20, in which the disc is slowly closed by the shock-absorbing force from the hydraulic cylinder. Further, a 'check valve having parallel-cylinder' (Korean Patent No. 10-1487748) by the applicant(s) may be selected as the control valve 30 to further decrease the closing speed of the disc.

Further, various mechanical slow closing valves such as a needle valve, a spring type valve, a diaphragm valve, and a relief valve may be used as the control valve 30 as long as they can close after a predetermined period of time passes from the moment when a pump is stopped.

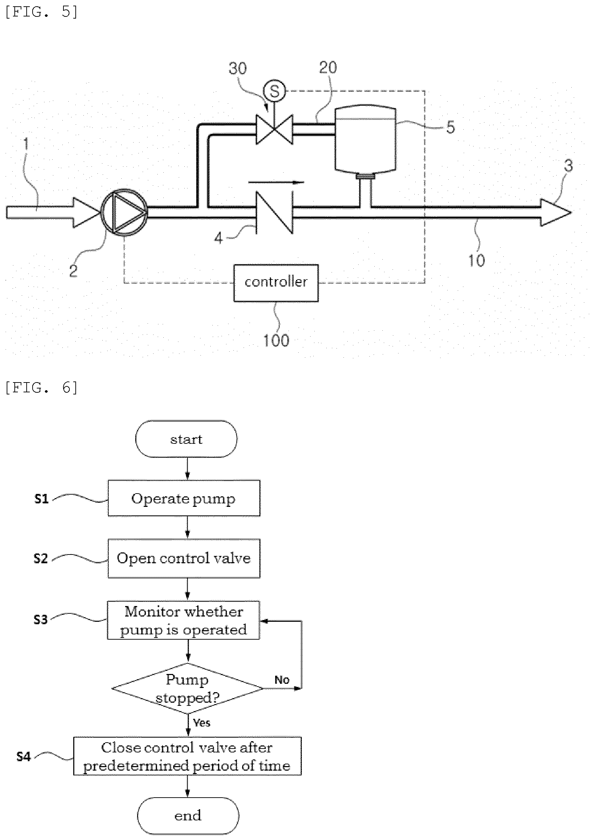

Such one-way valves are all mechanical valves and the control valve 30 may be an electrically controlled valve such as an electric valve or a solenoid valve for more precise control. FIG. 5 shows an embodiment of a water piping system equipped with a control valve 30 that is electrically controlled to open and close. As shown in the figure, the control valve 30 may be an electric valve that is electrically controlled to automatically open and close, and a controller 100 for controlling the control valve 30 is provided. The controller 100 may be configured to control the parts of the entire water piping system including a pump, or to independently control only the control valve 30.

According to this configuration, the controller 100 monitors whether the pump 2 is operated in real time, and opens the control valve 30 while the pump 2 is operated and closes the control valve 30 when the pump 2 is stopped.

FIG. 6 is a flowchart showing a process of controlling a water piping system with an electric control valve 30, as shown in FIG. 5. As shown in the figures, the controller 100 first operates the pump to deliver fluid through the water piping system so that the fluid flows through the main pipe 10 and the sub-pipe 20 (S1), and opens the control valve 30 (S2). Next, the controller 100 monitors whether the pump is operated in real time (S3). Monitoring whether the pump is operated may be performed by monitoring the number of revolutions of the pump, monitoring a power supply switch, monitoring a power supply sensor, monitoring a flowmeter, monitoring a pressure sensor, and sensing load current of the pump. Opening and closing the control valve may be performed under a predetermined pressure or more to prevent malfunction during idling or no-load operation even if the pump is rotated (operated).

When it is determined that the pump has been stopped as the result of monitoring whether the pump is operated, the controller 100 closes the control valve 30 after a predetermined period of time (input in advance in the controller 100) passes (S4). To this end, the control valve 30 may have a built-in timer to be closed when a predetermined period of time passes after the controller 100 gives a control instruction.

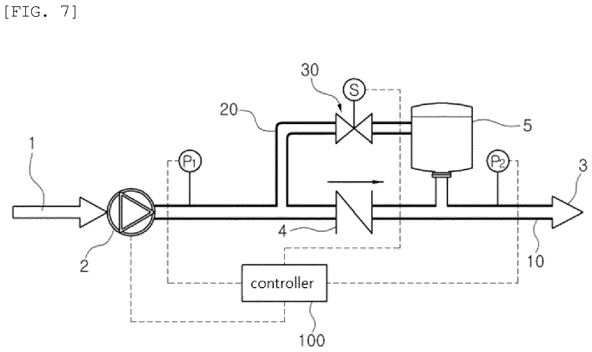

FIG. 7 shows another embodiment of a water piping system equipped with a control valve 30 that is electrically controlled to open and close. As shown in the figure, in this embodiment, an electric valve 30 such as a solenoid valve and a controller 100 are provided. Further, a first pressure sensor P1 and a second pressure sensor P2 for respectively measuring pressure at the front side and the rear side of a main valve 4 of a main pipe 10 are further provided.

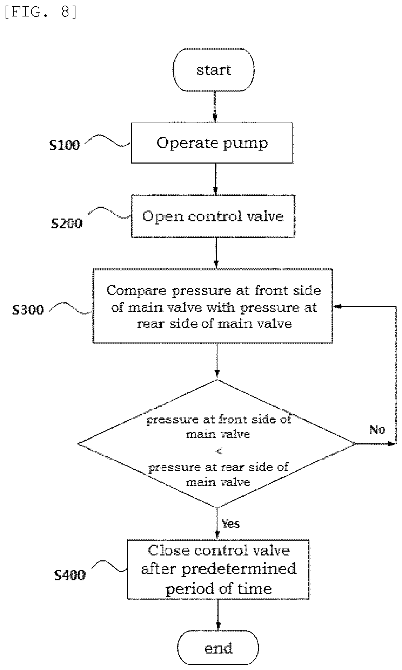

FIG. 8 shows a flowchart illustrating a process of controlling a water piping system equipped with the electric control valve 30, the first pressure sensor PI, and the second pressure sensor P2, as shown in FIG. 7. First of all, The controller 100 operates a pump to deliver fluid through the water piping system (S100) so that the fluid flows through the main pipe 10 and a sub-pipe 20, and opens the control valve 30 (S200). Next, the controller 100 receives in real time pressure values at the front end and the rear end of the main valve 4 of the main pipe 10 from the first pressure sensor P1 and the second pressure sensor P2 and compares the pressure values (S300).

The fact that the pressure at the front end of the main valve 4 is higher means that the pump is in operation. Accordingly, the controller 100 keeps the control valve 30 open when the pressure at the front side of the main valve 4 is higher than the pressure at the rear side (when the pump is in operation), and closes the control valve 30 in other cases, for example, when the pressure at the rear side of the main valve 4 is higher than the pressure at the front side (when the pump is stopped) (S400).

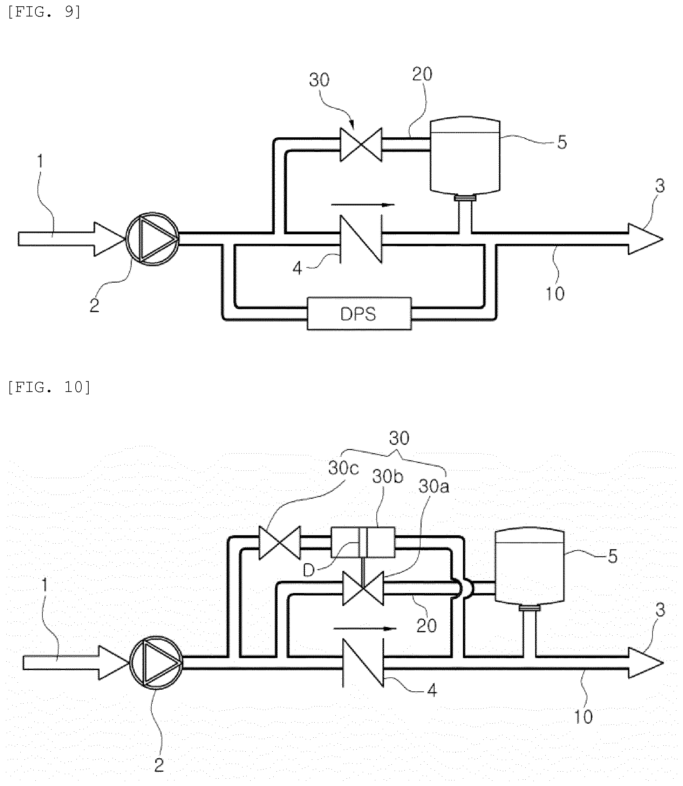

On the other hand, as another embodiment, the control valve 30 may be controlled to open and close by a differential pressure sensor DPS, as shown in FIG. 9. The differential pressure sensor DPS senses the pressure difference between the front and rear sides of the main valve 4, and controls the control valve 30 to close after a predetermined period of time passes when it is determined that the pressure at the rear side is higher than the pressure at the front side of the main valve 4.

As another embodiment, the control valve 30 may include an actuator 30b and a valve body 30a such that the valve body 30a is opened and closed by a pressure difference between the front and rear ends of the actuator 30b, and may further include a needle valve 30c, as shown in FIG. 10.

The valve body 30a is disposed in a sub-pipe 20 connecting the front side of a main valve 4 of a main pipe 10 and a pressure tank 5 to each other and the actuator 30b is connected to the valve body 30a. In detail, the actuator 30b has a disc D that horizontally divides the inside thereof to the left and right and, both ends of which are connected to the front and rear ends of the main valve 4 of the main pipe 10, respectively, through a hydraulic hose or a common pipe. Further, the disc D in the actuator 30b is connected to a valve unit (not shown) that connects/disconnects (opens/closes) the flow channel in the valve body 30a so that when the disc D is moved, the valve unit is operated to open/close the flow channel in the valve body 30a. The structure and the connection relationship of the disc D and the valve body 30a are not limited as long as the valve body 30a can be opened/closed when the disc D is moved. The system may be configured such that when the disc D is horizontally moved, the valve unit is horizontally moved to open the flow channel in the valve body 30a, or such that when the disc D is horizontally moved, the valve unit is rotated to open, using a gear assembly such as a rack and pinion between the disc D and the valve unit. When the valve unit is rotated to open and close, the valve body 30a may be a ball valve or a butterfly valve. According to this configuration, when the fluid at the front and rear ends of the main valve flows to the front and rear ends of the actuator 30b, respectively, the disc D in the actuator 30b is moved to any one side by the pressure difference between the front and rear ends. Further, as the disc D is moved, the valve unit of the valve body 30a connected to the disc D is moved and the flow channel of the sub-pipe 20 is closed.

The control valve is controlled to open and close, depending on whether the pump 2 is operated. While the pump 2 is operated, the pressure at the front side is higher than the pressure at the rear side of the main valve 4, and when the pump 2 is stopped, the pressure at the front side is lower than the pressure at the rear side of the main valve 4. Accordingly, while the pump 2 is operated, the disc D in the actuator 30b is moved from the front side to the rear side of the main valve 4 (from the left to the right in FIG. 10), so the valve body 30a is opened and the fluid at the front side of the main valve 4 of the main pipe 10 is supplied to the pressure tank 5 through the sub-pipe 20. In contrast, when the pump 2 is stopped, the pressure at the rear side of the main valve 4 becomes higher, so the disc D in the actuator 30b is moved from the rear side to the front side of the main valve 4 (to the left in the figure), thereby closing the valve body 30a.

A needle valve 30c may be additionally disposed at the front side of the actuator 30b. When the needle valve 30c is provided, it is possible to reduce the speed of the disc D moving from the rear side to the front side by adjusting the amount of fluid flowing to the main pipe out of the actuator 30b when the disc D in the actuator 30b is moved to the front side with the pump stopped, by setting the degree of opening in advance, whereby it is possible to achieve the effect of slowly closing the valve body 30a.

Although the front and rear ends of the actuator 30b are connected to the front and rear ends of the main valve, respectively, in the above description, the front end of the actuator 30b may be connected to the sub-pipe connected to the front end of the main valve and the rear end of the actuator 30b may be connected to the sub-pipe or the pressure tank connected to the rear end of the main valve.

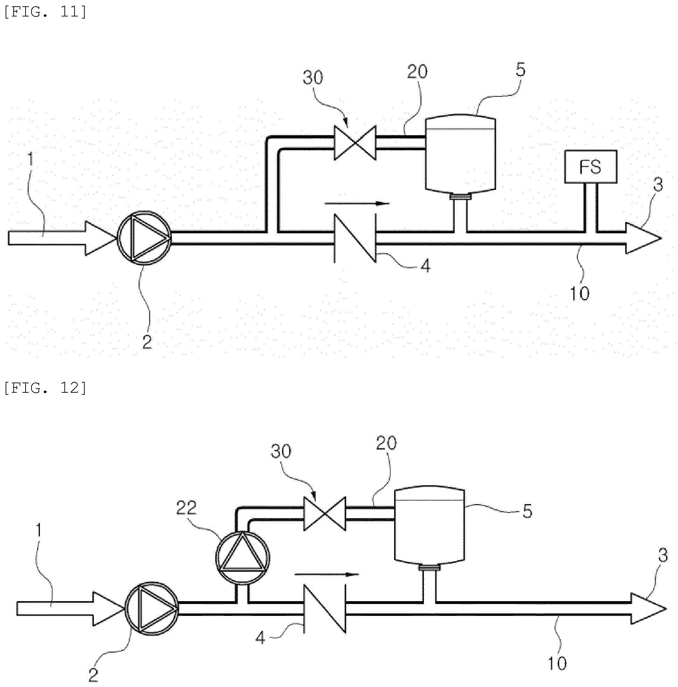

Further, as another embodiment, the control valve 30 may be controlled to open and close by a flow rate sensor FS, as shown in FIG. 11. The flow rate sensor FS is disposed at the rear side of the main valve 4 of the main pipe 10 to close the control valve 30 after a predetermined time passes when it is determined that the pump has been stopped on the basis of the sensed flow of fluid.

When there is no or little flow of fluid through the sub-pipe 20, as shown in FIG. 12, a specific sub-pump 22 may be disposed in the sub-pipe 20 to force the fluid in the sub-pipe 20 to the pressure tank 5.

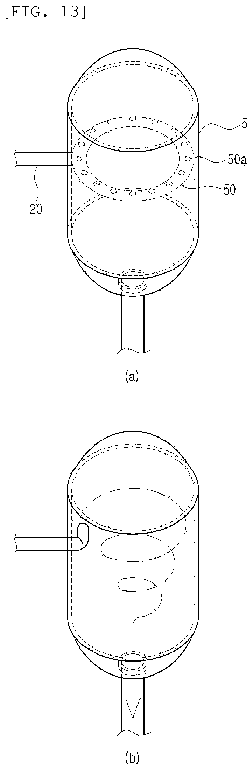

Further, a diffuser 50 connected to the sub-pipe 20 may be additionally provided in the pressure tank 5 so that the fluid supplied through the sub-pipe 20 is uniformly distributed in the pressure tank 5. The diffuser 50, as shown in FIG. 13(a), is connected to the sub-pipe 20 connected to the rear side of the control valve 30, is annularly disposed around the inner side of the pressure tank 5, and has a plurality of spray holes 50a formed through a surface thereof.

Further, the diffuser 50, as shown in FIG. 13 (b), has an end curved in an elbow shape. In this case, fluid moved down while turning around the inner side of the pressure tank. Further, the diffuser 50 may be formed in various types such as a fixed type or a floating type.

On the other hand, though not shown in the figures, in a system having a main pipe 10 that is a circulation pipe, gas in the main pipe 10 flows to a pressure tank 5 through a sub-pipe 20, so the sub-pipe 20 may be used to discharge the gas in the main pipe 10.

In most work sites, a check valve, an electric valve (not shown) for controlling flow rate, and a manual shutoff valve (not shown) are installed at the outlet port of a pump, so a large friction loss is caused by the valves and a large pressure difference is generated between the front end of the check valve and the joint of a pressure tank 5 and a main pipe 10. Accordingly, an environment in which fluid can flow to the pressure tank through a sub-pipe where there is little friction loss is made and a large pressure difference is generated when a pump is operated with the electric valve (not shown) for controlling a flow rate closed by about 10 to 50% to control a flow rate, so the technique for preventing dead water can be more effectively used. Further, it may be possible to control the amount of fluid flowing to the sub-pipe 20 by adjusting the degree of opening of the electric valve (not shown) for controlling a flow rate.

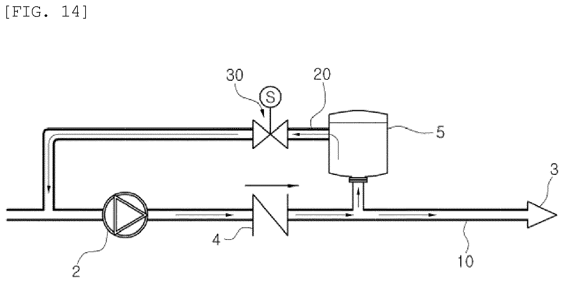

On the other hand, another embodiment of a water piping system for preventing dead water is shown in FIG. 14. Although the front end of the sub-pipe 20 connected to the pressure tank 5 is connected between the pump 2 and the main valve 4 in the embodiments described above, the front side of a control valve 30 is connected to the front end of a pump 2 in this embodiment. When the control valve 30 is opened, fluid in the pressure tank 5 is delivered to the inlet port of the pump. In this process, fluid is supplemented into the pressure tank 5 from a main pipe 10 as much as the fluid flowing into the pump 2 through the sub-pipe 20, and this circulation can prevent dead water. In this system, the control valve 30 may be periodically opened and closed at every predetermined time.

Although the present invention was described in detail with reference to embodiments, the scope of the present invention is not limited thereto and includes the range substantially equivalent to the embodiments.

## Claims

1. A water piping system comprising:
a pump pressurizing fluid;
a main pipe for delivering the fluid pressurized by the pump;
a main valve disposed at an outlet port of the pump;
a pressure tank connected to the main pipe;
a sub-pipe having a first end connected to a front side of the main valve of the main pipe and a second end connected to the pressure tank so that some of the fluid pressurized and discharged from the pump flows into the pressure tank through the sub-pipe; and
a control valve disposed in the sub-pipe to open and close a flow channel.

2. The system of claim 1, wherein the pump comprises a plurality of pumps connected to each other in parallel, the sub-pipe is disposed at a front end of a main valve disposed at an outlet port of any one of the pumps, and the control valve is disposed in the sub-pipe.

3. The system of claim 1, wherein the pump comprises a plurality of pumps connected to each other in parallel, the sub-pipe comprises a plurality of sub-pipes connected to the pressure tank, the sub-pipes are connected to front ends of main valves disposed at outlet ports of the pumps, respectively, and the control valve is disposed in each of the sub-pipes.

4. The system of claim 3, wherein the sub-pipes have first ends respectively connected to the front ends of the main valves disposed at the outlet ports of the pumps and second ends connected to a header, and the header is connected to the pressure tank.

5. The system of claim 1, wherein the control valve is a one-way valve that is opened only when pressure at a front end thereof is higher than pressure at a rear end.

6. The system of claim 1, wherein the control valve is closed after a predetermined period of time passes from the moment when the pump is stopped.

7. The system of claim 1, further comprising a controller controlling opening and closing of the control valve,
wherein the controller closes the control valve after a predetermined period of time passes from the moment when the pump is stopped.

8. The system of claim 1, further comprising:
a controller controlling opening and closing of the control valve;
a first pressure sensor sensing pressure at the front side of the main valve of the main pipe; and
a second pressure sensor sensing pressure at a rear side of the main valve of the main pipe,
wherein the controller receives and compares pressures at the front side and the rear side of the main valve sensed by the first pressure sensor and the second pressure sensor, and closes the control valve after a predetermined period of time passes when the pressure at the rear side of the main valve is higher than the pressure at the front side of the main valve as a result of the comparing.

9. The system of claim 1, further comprising a differential pressure sensor sensing a pressure difference between the front side and a rear side of the main valve,
wherein the differential pressure sensor senses a pressure difference between the front side and the rear side of the main valve and controls the control valve to close after a predetermined period of time passes when determining that pressure at the rear side of the main valve is higher than pressure at the front side of the main valve.

10. The system of claim 1, further comprising a flow rate sensor disposed at the rear side of the main valve of the main pipe,
wherein the control valve is closed after a predetermined period of time passes when it is determined that the pump has been stopped on the basis of flow of fluid sensed by the flow rate sensor.

11. The system of claim 1, wherein the control valve is a mechanical slow closing valve that is closed after a predetermined period of time passes from the moment when the pump is stopped.

12. The system of claim 11, wherein the control valve is a slow closing check valve.

13. The system of claim 1, wherein the control valve includes:
a valve body disposed in the sub-pipe having a front end connected to a front end of the main valve of the main pipe and a rear end connected to the pressure tank; and
an actuator having a disc dividing an inside horizontally to the left and right therein, having both ends connected to the front end and the rear end of the main valve, respectively, and opening and closing the valve body when the disc is moved by a pressure difference between the front end and the rear end of the main valve.

14. The system of claim 13, further comprising a needle valve disposed at a front side of the actuator.

15. The system of claim 1, further comprising a diffuser disposed in the pressure tank and connected to the sub-pipe,
wherein the diffuser is connected to the sub-pipe connected to a rear side of the control valve, is annularly disposed around an inner side of the pressure tank, and has a plurality of spray holes formed through a surface thereof.

16. The system of claim 1, further comprising a diffuser disposed in the pressure tank and connected to the sub-pipe,
wherein the diffuser is connected to the sub-pipe connected to a rear side of the control valve and has an end curved in an elbow shape.

17. The system of claim 1, further comprising a sub-pump disposed in the sub-pipe to force fluid in the sub-pipe to the pressure tank.

18. The system of claim 1, wherein the pressure tank is equipped with a discharge pipe and a discharge valve so that gas or impurities are discharged out of the pressure tank.

19. A method of controlling the water piping system of any one of claims 1 to 18, the method comprising:
delivering fluid through the main pipe and the sub-pipe by operating the pump;
opening the control valve disposed in the sub-pipe;
monitoring whether the pump is operated; and
closing the control valve when the pump is stopped.

20. The method of claim 19, wherein the control valve is closed after a predetermined period of time passes from the moment when the pump is stopped.

21. A method of controlling the water piping system of any one of claims 1 to 18, the method comprising:
delivering fluid through the main pipe and the sub-pipe by operating the pump;
opening the control valve disposed in the sub-pipe;
sensing pressure at the front side and pressure at the rear side of the main valve of the main pipe; and
comparing the sensed pressures at the front side and the rear side of the main valve and closing the control valve when the pressure at the rear side of the main valve is higher than the pressure at the front side of the main valve, as a result of the comparing.

22. The method of claim 21, wherein the control valve is closed after a predetermined period of time passes, when the pressure at the rear side of the main valve is higher than the pressure at the front side of the main valve, as a result of comparing the sensed pressures at the front side and the rear side of the main valve.

23. A water piping system comprising:
a pump pressurizing fluid;
a main pipe for delivering the fluid pressurized by the pump;
a main valve disposed at an outlet port of the pump;
a pressure tank connected to the main pipe;
a sub-pipe having a first end connected to a front end of the pump and a second end connected to the pressure tank so that fluid in the pressure tank is supplied to a front side of the pump through the sub-pipe; and
a control valve disposed in the sub-pipe to open and close a flow channel.
